Europäisches Patentamt

European Patent Office

Office européen des brevets

(19)

(11) Publication number: **0 228 276 B1**

## (12) EUROPEAN PATENT SPECIFICATION

(45) Date of publication of patent specification: **21.11.91**   (51) Int. Cl.⁵: **C04B 35/58**

(21) Application number: **86310057.4**

(22) Date of filing: **23.12.86**

(54) Sintered silicon nitride ceramic article and method for production thereof.

(30) Priority: **25.12.85 JP 290719/85**

(43) Date of publication of application:
**08.07.87 Bulletin 87/28**

(45) Publication of the grant of the patent:
**21.11.91 Bulletin 91/47**

(84) Designated Contracting States:
**DE FR GB NL**

(56) References cited:
**EP-A- 0 015 421**
**EP-A- 0 124 989**
**GB-A- 2 063 302**
**GB-A- 2 169 594**

**CHEMICAL ABSTRACTS, vol. 104, no. 16,
April 1986, page 303, abstract no. 134799s,
Columbus, Ohio, US; & JP-A-60 191 063
(KYOCERA CORP.) 28-09-1985**

**CHEMICAL ABSTRACTS, vol. 94, no. 16, April
1981, page 313, abstract no. 126355d, Colum-
bus, Ohio, US; & JP-A-80 109 277 (NATIONAL
INSTITUTE FOR RESEARCH IN INORGANIC
MATERIALS) 22-08-1980**

(73) Proprietor: **KABUSHIKI KAISHA TOSHIBA
72, Horikawa-cho Saiwai-ku
Kawasaki-shi Kanagawa-ken 210(JP)**

(72) Inventor: **Komatsu, Michiyasu
c/o Patent Division 1-1 Shibaura 1-chome
Minato-ku Tokyo 105(JP)**
Inventor: **Ohta, Hiroyasu
c/o Patent Division 1-1 Shibaura 1-chome
Minato-ku Tokyo 105(JP)**

(74) Representative: **Freed, Arthur Woolf et al
MARKS & CLERK 57-60 Lincoln's Inn Fields
London WC2A 3LS(GB)**

## Description

Field of the Invention and Related Art Statement

This invention relates to a sintered silicon nitride ceramic article excellent in high-temperature strength and a method for the production thereof.

Sintered ceramic articles using silicon nitride as a main component thereof possess highly satisfactory thermal stability to resist heat up to 1,900°C, exhibit a low thermal expansion coefficient, and excel in resistance to thermal shock. Owing to the possession of these fine qualities, their adaptability for gas turbine layers, nozzles, and various other parts requiring high strength and thermal stability is now being tried. Further because they exhibit a satisfactory ability of corrosionproof to metals, their actual utility as materials for protecting against fused metal has been already under way.

Heretofore as compositions for the production of sintered silicon nitride ceramic articles, a silicon nitride-yttrium oxide-aluminium oxide-aluminium nitride system and systems additionally incorporating oxides of zirconium, magnesium, and titanium in the system just mentioned have been adopted. USP 4,412,009 issued on October 25, 1983, for example, discloses a method for producing a sintered article excellent in high-temperature strength by molding a mixed ceramic powder consisting of not more than 10% by weight of yttrium oxide, not more than 10% by weight of aluminium oxide, not more than 5% by weight of aluminium nitride, not more than 5% by weight of at least one member selected from the group consisting of titanium oxide, magnesium oxide, and zirconium oxide, and the balance to make up 100% by weight of silicon nitride powder and sintering the molding ceramic powder.

Further, USP 4,376,742 issued on March 15, 1983, also discloses a method for producing a sintered silicon nitride article of high density excellent in high-temperature strength by sintering silicon nitride powder containing 1.0 to 2.5% of cerium oxide ($CeO_2$) at 1,650° to 1,800°C under high pressure for 30 to 60 minutes and further subjecting the sintered powder to a heat treatment under the atmosphere of an inert gas to 1,400° to 1,600°C for several hours to 48 hours thereby expelling cerium oxide. Since this method requires the sintering to be carried out under high pressure, it neither suits mass production nor proves economical. The preparation of sintered silicon nitride articles using yttrium oxide, lanthanum oxide and cerium oxide as sintering aid is disclosed in EP-A-0124989 and EP-A-0015421 suggest the use of yttrium oxide as sintering aid. JP-A-60 191 063 discloses the use of neodynium or praseodymium oxide as sintering agents, but not in the quantities and specific combinations with other oxides as per claim 1 of the present invention, nor with the surprisingly improved properties demonstrated herein.

Despite the efforts made as described above, the existing sintered ceramic articles have room for further improvement in the sintering property under the atmospheric pressure and the mechanical strength at elevated temperature.

Object and Summary of the Invention

The inventors have found that when one of the oxides of specific rare earth elements except for yttrium is used in the place of yttrium oxide which has been heretofore used as a sintering aid, the sintered article consequently obtained experiences a particularly small decline of strength at high temperatures and, depending on the specific kind of oxide to be adopted, the sintered article retains as much strength at high temperatures as at normal room temperature.

This invention which has been produced based on the finding mentioned above aims to provide a sintered silicon nitride ceramic article which exhibits an improved sintering property and experiences only a small decline of strength at high temperatures.

To be specific, the sintered silicon nitride ceramic article contemplated by the present invention is characterized by the fact that this sintered article is obtained by sintering a ceramic mixture consisting of not more than 10% by weight (excluding 0% content) each of neodymium oxide ($Nd_2O_3$) and/or praseodymium oxide ($Pr_6O_{11}$) with optionally other oxides of rare earth elements (other than yttrium oxide ($Y_2O_3$); not more than 10% by weight (excluding 0% content) of aluminum oxide; not more than 10% by weight (excluding 0% content) of aluminum nitride, not more than 5% by weight (excluding 0% content) each of at least one member selected from the group consisting of zirconium oxide, magnesium oxide, and titanium oxide, and the balance to make up 100% by weight of silicon nitride.

The method for the production of the sintered silicon nitride ceramic article contemplated by this invention is characterized by sintering the shaped article of the aforementioned ceramic mixture in a non-oxidizing atmosphere at a temperature in the range of 1,650°C to 1,850°C.

In other words, this invention aims to provide a sintered silicon nitride ceramic article possessing an improved sintering property and succumbing only to a small loss of strength at elevated temperatures by adding to the combination of the silicon nitride-alumium oxide-aluminum nitride-titanium oxide, magnesium oxide or zirconium oxide system not more than 10% by weight of at least one member sleected from the group consisting of neodymium oxide, and praseodymium oxide among other oxides of rare earth elements (except for yttrium).

The specific oxides of rare earth elements, i.e. neodymium oxide and praseodymium oxide, at least one of which constitutes the additive component contemplated by this invention, function as an agent for promoting the sintering. One oxide or a plurality of oxides selected from the group mentioned above are incorporated in the ceramic mixture, each in an amount not exceeding 10% by weight, preferably falling in the range of 0.5 to 7.5% by weight, based on the total amount of the ceramic mixture. Use of any of the additive components in an amount exceeding 10% by weight is undesirable because such use of an additive component has the possibility of impairing the mechanical strength and impact strength of the produced sintered article. The total amount of the oxides of rare earth elements used as additive components in the ceramic mixture is desired to be not more than 10% by weight.

The total amount of silicon nitride is suitably from 80 to 95% by weight and the relative density of the sintered article is preferably not less than 98%.

Neodymium oxide and praseodymium oxide are notably effective in improving high-temperature strength and resistance to oxidation. Combined addition of these two oxides further enhances the improvement of high-temperature strength. Addition of these oxides in combination with lanthanum oxide is also highly effective.

Aluminium oxide which is another additive component in this invention is as effective as any of the other additive components mentioned above. It is incorporated in the ceramic mixture in an amount not exceeding 10% by weight, preferably falling in the range of 0.5 to 7.5% by weight, based on the total amount of the ceramic mixture.

Aluminum nitride which is yet another additive component in this invention enhances mechanical strength at elevated temperature and, at the same time, contributes to promoting the sintering. If this additive component is used in an excessively large amount, it lowers resistance to thermal shock and impairs strength at normal room temperature. Thus, the amount of this additive component to be used is specified to be not more than 10% by weight.

As other additive components of this invention than those already described above, one member or more members from among titanium oxide, zirconium oxide, and magnesium oxide are desired to be incorporated in the ceramic mixture, each in an amount of not more than 5% by weight and in a total amount of not more than 10% by weight.

The total amount of additive components incorporated as sintering aid in the ceramic mixture is desired to fall in the range of 10 to 15% by weight based on the amount of the ceramic mixture.

In accordance with this invention, a mixture containing the aforementioned components in the prescribed percentage composition is molded in a prescribed shape and sintering the shaped mixture in a non-oxidizing atmosphere at a temperature in the range of 1,650° to 1,850° C.

For this treatment, such a non-oxidizing gas as nitrogen gas or argon is selected for forming an atmosphere enveloping the site of sintering. This is because, in an oxygen-containing atmosphere, silicon nitride is oxidized into $SiO_2$ at elevated temperatures and, as a result, the production of a sintered silicon nitride ceramic article excellent in high-temperature strength aimed at by the invention is not obtained. This sintering can be carried out by the atmospheric pressure process or may be performed by any of the other processes such as, for example, the hot press process, the pressed atmosphere process, and the hot hydrostatic pressure process (HIP). As a result, there is obtained a sintered silicon nitride ceramic article of high density excellent in high-temperature mechanical strength and resistance to thermal shock. Among sintering processes, the atmospheric pressure process permits production of sintered articles in complicated shapes and suits mass production.

Detailed Description of Preferred Embodiments

Now, the present invention will be described more specifically below with reference to working examples.

Example 1 (Comparative):

A mixed powder consisting of 89.7% by weight of silicon nitride powder containing 95% of $\alpha$-$Si_3N_4$ and having an average particle diameter of 0.8 $\mu$m, 4.5% by weight of samarium oxide powder having an averge particle diameter of 1 μm, 3.1% by weight of aluminum nitride powder having an average particle diameter of 1 μm, 1.8% by weight of aluminum oxide powder having an average particle diameter of 0.5 μm, and 0.9% by weight of titanium oxide powder having an average particle diameter of 1 μm was pulverized and mixed with a solvent in a ball mill to prepare a powder as a raw material. Then a binder was added, this mixture was molded under a pressure of 1 t/cm² (98.1 MPa) to produce a block measuring 50 mm x 50mm x 7 mm (thickness). By sintering this block in the atmosphere of nitrogen gas at 1,700°C for two hours under atmospheric pressure, there was obtained a sintered silicon nitride ceramic article.

Examples 2 and 3 (Comparative) and 4 and 5:

Sintered silicon nitride ceramic articles were produced by following the procedure of Example 1, excepting various substances indicated in the following table were respectively used in the place of samarium oxide.

Examples 6-8:

Sintered silicon nitride ceramic articles were produced by following the procedure of Examples 1-5, excepting two rare earth element oxides indicated in the following table were used in equal amounts each in the place of single rare earth element oxides used in Examples 1-5.

Comparative Experiment:

A sintered silicon nitride ceramic article was produced by following the procedure of Example 1, excepting yttrium oxide was used in the place of samarium oxide.

The relative density and flexural strength of each of the sintered articles obtained in the working examples and the comparative experiment were as shown in the following table, The relative density indicated in the table shows the percentage of the actual sensity of a given sintered article relative to the theoretical density thereof. The flexural strength represents the numerical value obtained by cutting a rest piece 3 x 3 x 30 (mm) from a given sintered article and measuring the three-point bending strength of the test piece at a cross head speed of 0. 5 mm/min at a span of 20 mm. The flexural strength was measured at room temperature and at 1,200°C. The value shown in the table is an average of the results obtained of four test pieces of each sintered article.

Table

| Sintered aritcle | Sintering aid | Relative density (%) | Flexural strength (kg/mm$^2$) (MPa) | |
|---|---|---|---|---|
| | | | Room temperature | 1,200°C |
| Example 1 | Sm$_2$O$_3$ | 99.9 | 105 [1030] | 75 [734] |
| 2 | CeO$_2$ | 99.9 | 105 [1030] | 75 [734] |
| 3 | La$_2$O$_3$ | 99.9 | 110 [1079] | 75 [734] |
| 4 | Nd$_2$O$_3$ | 99.8 | 105 [1030] | 90 [883] |
| 5 | Pr$_6$O$_{11}$ | 99.6 | 100 [981] | 90 [883] |
| 6 | Nd$_2$O$_3$ Pr$_6$O$_{11}$ | 99.8 | 110 [1079] | 95 [932] |
| 7 | Nd$_2$O$_3$ La$_2$O$_3$ | 99.6 | 105 [1030] | 90 [883] |
| 8 | Nd$_2$O$_3$ CeO$_2$ | 99.8 | 100 [981] | 80 [785] |
| Comparative Experiment | Y$_2$O$_3$ | 98.6 | 100 [981] | 75 [736] |

It is noted from the table that the sintered articles using Nd$_2$O$_3$ and Pr$_6$O$_{11}$ as sintering aid excelled in high-temperature strength and also in resistance to oxidation.

As described above, the sintered silicon nitride ceramic article of the present invention has an advantage that it excels in the sintering property and succumbs to less impairment of strength at elevated temperatures.

## Claims

1. A sintered silicon nitride ceramic article, comprising not more than 10% by weight (excluding 0% content) of neodymium oxide and/or praseodymium oxide with, optionally, other rare earth metal oxides (other than yttrium oxide); not more than 10% by weight (excluding 0% content) of aluminum oxide; not more than 10% by weight (excluding 0% content) of aluminum nitride; not more than 5% by weight (excluding 0% content) of at least one member selected from the group consisting of zirconium oxide, magnesium oxide, and titanium oxide; and the balance being silicon nitride.

2. A sintered silicon nitride ceramic article according to Claim 1, wherein the amount of silicon nitride is in the range of 80 to 95% by weight.

3. A sintered silicon nitride ceramic article according to Claim 1, wherein the relative density of said sintered silicon nitride ceramic article is not less than 98%.

4. A method for the production of a sintered silicon nitride ceramic article, which is characterized by the fact that a molded mass of a ceramic mixture composed of not more than 10% by weight (excluding 0% content) of neodymium oxide and/or praseodymium oxide together with, optionally, other rare earth metal oxides (other than yttrium oxide); not more than 10% by weight excluding 0% content) of aluminum oxide; not more than 10% by weight (excluding 0% content) of aluminum nitride; not more than 5% by weight (exclduing 0% content) of at least one member selected from the group consisting of zirconium oxide, magnesium oxide, and titanium oxide; and the balance being silicon nitride; is sintered in a non-oxidising atmosphere at a temperature in the range of 1,650° C to 1,850C.

5. A method according to Claim 4, wherein the amount of silicon nitride is in the range of 80 to 95% by weight.

## Revendications

1. Corps céramique fritté en nitrure de silicium ne comprenant pas plus de 10 % en poids (excluant la teneur 0 %) d'oxyde de néodyme et/ou d'oxyde de praséodyme avec, facultativement, d'autres oxydes de métaux terres rares (autres que l'oxyde d'yttrium); pas plus de 10 % en poids (excluant la teneur 0 %) d'oxyde d'aluminium; pas plus de 10 % en poids (excluant la teneur 0 %) de nitrure d'aluminium; pas plus de 5 % en poids (excluant la teneur 0 %) d'au moins un membre choisi dans le groupe constitué par l'oxyde de zirconium, l'oxyde de magnésium et l'oxyde de titane et la balance étant du nitrure de silicium.

2. Un corps fritté en nitrure de silicium suivant la revendication 1, dans lequel la quantité de nitrure de silicium est dans la plage de 80 à 95% en poids.

3. Un corps fritté en nitrure de silicium suivant la revendication 1, dans lequel la densité relative dudit corps céramique en nitrure de silicium n'est pas inférieure à 98 %.

4. Une méthode pour la production d'un corps céramique fritté en nitrure de silicium qui est caractérisée par le fait qu'une masse moulée d'un mélange céramique composé de pas plus de 10 % en poids (excluant la teneur 0 %) d'oxyde de néodyme et/ou d'oxyde de praséodyme avec, facultativement, d'autres oxydes de métaux terres rares (autres que l'oxyde d'yttrium); pas plus de 10 % en poids (excluant la teneur 0 %) d'oxyde d'aluminium; pas plus de 10 % en poids (excluant la teneur 0 %) de nitrure d'aluminium; pas plus de 5 % en poids (excluant la teneur 0 %) d'au moins un membre choisi dans le groupe constitué par l'oxyde de zirconium, l'oxyde de magnésium et l'oxyde de titane et la balance étant du nitrure de silicium; est fritté dans une atmosphère non-oxydante à une température dans la plage de 1.650° à 1.850° C.

5. Une méthode suivant la revendication 4, dans laquelle la quantité de nitrure de silicium est située dans la plage de 80 à 95 % en poids.

## Patentansprüche

1. Gesinterter Siliciumnitrid-Keramikformkörper, der enthält nicht mehr als 10 Gew.-% (ausschließlich des Gehalts von 0 %) Neodymoxid und/oder Praseodymoxid zusammen mit gegebenenfalls anderen Seltenen Erdmetalloxiden(außer Yttriumoxid);
nicht mehr als 10 Gew.-% (ausschließlich des Gehaltes von 0 %) Aluminiumoxid;
nicht mehr als 10 Gew.-% (ausschließlich des Gehaltes von 0 %) Aluminiumnitrid;
nicht mehr als 5 Gew.-% (ausschließlich des Gehaltes von 0 %) mindestens eines Vertreters, ausgewählt aus der Gruppe, die besteht aus Zirkoniumoxid, Magnesiumoxid und Titanoxid; und Siliciumnitrid als Rest.

2. Gesinterter Siliciumnitrid-Keramikformkörper nach Anspruch 1, worin die Menge an Siliciumnitrid in dem Bereich von 80 bis 95 Gew.-% liegt.

3. Gesinterter Siliciumnitrid-Keramikformkörper nach Anspruch 1, worin die relative Dichte des gesinterten Siliciumnitrid-Keramikformkörpers nicht weniger als 98 % beträgt.

4. Verfahren zur Herstellung eines gesinterten Siliciumnitrid-Keramikformkörpers, das dadurch gekennzeichnet ist, daß eine geformte Masse aus einer Keramikmischung, die besteht aus nicht mehr als 10 Gew.-% (ausschließlich des Gehaltes von 0 %) Neodymoxid und/oder Praseodymoxid zusammen mit gegebenenfalls anderen Seltenen Erdmetalloxiden (außer Yttriumoxid);
nicht mehr als 10 Gew.-% (ausschließlich des Gehaltes von 0 %) Aluminiumoxid;

nicht mehr als 10 Gew.-% (ausschließlich des Gehaltes von 0 %) Aluminiumnitrid;

nicht mehr als 5 Gew.-% (ausschließlich des Gehaltes von 0 %) mindestens eines Vertreters, ausgewählt aus der Gruppe, die besteht aus Zirkoniumoxid, Magnesiumoxid und Titanoxid; und Siliciumnitrid als Rest;

in einer nicht-oxidierenden Atmosphäre bei einer Temperatur in dem Bereich von 1 650 bis 1 850° C gesintert wird.

5. Verfahren nach Anspruch 4, worin die Menge des Siliciumnitrids in dem Bereich von 80 bis 95 Gew.-% liegt.